# EUROPEAN PATENT APPLICATION

(11) **EP 1 220 131 A2**
(43) Date of publication of application: **03.07.2002**
(21) Application number: 01610125.5
(22) Date of filing: 07.12.2001
(51) Int. Cl.: G06F 17/60

(54) **System and method of providing a replacement of a replaceable product of an insurance claim**

(30) Priority: 07.12.2000 DK 200001835
(71) Applicant: ScalePoint Technologies Limited, 1310 Copenhagen K (DK)
(72) Inventor: Heering, Peter, 2100 Copenhagen (DK)
(74) Representative: Boesen, Johnny Peder

(57) **Abstract**

This invention relates to a method of providing a replacement for a replaceable product of an insurance claim, comprising the steps of: receiving relevant information, from a client, of the replaceable product to be replaced, deriving information from a database, comprising information relating to a number of products, by matching information of said replaceable product with products in said database resulting in a product match of either a first, second, third or fourth type, where the derived information comprises information representing a compensation price for said replaceable product, said compensation price being dependent of the resulting type of match, and providing said client with access to an online web-shop, having access to the database (504), where the client may purchase products present in the database according to certain restrictions for an amount equal to said compensation price where the price of each product in the database is an internal price.

Hereby, better service is provided to insurance clients while payout costs is reduced/saved and fraud is avoided.

The invention also relates to a system for the same and a computer readable medium.

## Description

The present invention relates to a system for providing a replacement for a replaceable product of an insurance claim.

The present invention also relates to a method of providing a replacement for a replaceable product of an insurance claim.

Additionally, the invention relates to a computer-readable medium that may cause a processing unit to execute the method of the present invention.

Patent specification US 5,950,169 discloses a system and a method for managing insurance claim processing, where a user may generate a data file comprising information relating to an insurance claim, resulting in a work file that may be sent between various parties, e.g. an auditor, an appraiser, a claims office, and/or a home office, involved in processing the insurance claim. This may e.g. result in a cost estimate, modifiable by at least some of the involved parties, of a damaged insured item. The damaged item may be repaired or compensated for by issuing a cheque to the insured party.

Even though the specification discloses an efficient way of handling an insurance claim, it does not disclose any solution with respect to replacing items with similar items as a compensation. Only damaged insured items/products, like a car, etc., which is either repaired or compensated for in cash are handled.

Patent application WO 96/24103 discloses an insurance claim processing system, where a user specifies information via a telephone network to a data processor executing an algorithm. If certain requirements of the algorithm are meet, an automatic payment of the insurance claim is made. No compensation in-kind, i.e. with a similar product, is disclosed. Additionally, no incentive towards reducing insurance fraud is given.

A general problem for insurance companies is that some people may be tempted to swindle since cash is involved. Additionally, a supplier/manufacturer is generally more interested in selling a new product to the insurance client than that the client simply receives cash that e.g. may be spent on something completely different, like a trip abroad, another kind of product, etc.

A problem for an insurance client is that due to the deduction of a depreciation amount and e.g. an excess, deductible, etc. according to the insurance policy the compensation amount/price would normally be lower than the amount required to acquire the exact same product. This is especially true for older products (products purchased some time ago).

An object of the present invention is to provide a more simple and/or efficient system/method of managing insurance claims.

Another object is to provide a system/method that solves the above-mentioned problems.

A further object of the present invention is to provide a system/method that at least reduces the incentive to commit fraud in connection with an insurance claim.

An additional object of the present invention is to provide a system/method that aims to reduce cash-payouts for an insurance claim.

Yet another object of the present invention is to provide a system/method of managing insurance claims that improves the service for a customer and reduces transaction costs for an insurance company.

Another object is to provide a system/method comprising an efficient and simple match between a substitute, similar product, a product in kind, etc. and a lost/damaged item of an insurance claim.

These objects, among others, are achieved by a method of providing a replacement for a replaceable product of an insurance claim, comprising the steps of:
- receiving relevant information, from a client, of the replaceable product to be replaced,
- deriving information from a database, comprising information relating to a number of products, by matching information of said replaceable product with products in said database resulting in a product match of either a first, second, third or fourth type, where the derived information comprises information representing a compensation price for said replaceable product, said compensation price being dependent of the resulting type of match, and
- providing said client with access to an online web-shop, having access to the database, where the client may purchase products present in the database according to certain restrictions for an amount equal to said compensation price where the price of each product in the database is an internal price.

In this way, better service is provided to insurance clients while payout costs is reduced/saved and fraud is avoided.

Additionally, a simple and efficient method of handling insurance claims is obtained where the client is provided with the possibility of receiving a replacement in kind for lost/damaged products in a very convenient way.

Additionally, an internal price would typically be based on negotiations with a supplier of the product(s) and in the view of the large quantity of goods that such a method/system would use, it would be very likely to obtain an internal price approximately 30 % lower than the normal retail price (i.e. the price that a person normally would have to pay for the product using traditional sales channels) for the same product. Especially, the lower internal price may arise from the fact that the insurance company will not have a direct profit for the products it uses as replacements. In this way, an insurance company would in many cases be able to, using the system/method, to offer the insurance client a brand new product as a replacement for the lost product. Even taking insurance depreciation as function of the lost products age (time since it was purchased) into account, a product's value/compensation price at the time it was lost/damaged would most likely still be larger than the above-mentioned internal price. In this way, the insurance companies using the system/method may offer a client a brand new replacement of the lost/damaged as opposed to offering an amount of money being equal to the value/compensation price at the time it was lost/damaged. This compensation price/value does not otherwise provide the client with the possibility of re-acquiring the lost/damaged product as new via the traditional sales channels since these normally takes a profit.

So in this way, automated insurance claims handling with an Internet-accessed replacement service and an e-business exchange is obtained. Leading insurance companies may be gathered on a collective, non-competitive platform with the aim to reduce cash-payouts and replace as many lost or damaged items as possible "in kind". This pooling of insurance companies will generate a large buying power of strategic goods, improve efficiency and service, reduce transaction costs and create significant volume discounts. For the services, an agreed share of obtained savings may be collected from the insurers and a fee per transaction from the suppliers on top of a software-licensing fee. The invention provides claims handlers and assessors with a tool at hand that allows access to online pricelists with and without discounts and a web-based search engine that can intelligently search for and match lost or damaged items in the replacement universe of the invention.

Additionally, it is important to note that all involved stakeholders benefit from the present invention. Insurers/insurance companies will offer better and faster claims handling and reduce payout costs through volume discounts, dis-intermediation, reduction of fraud incentives, and reduction of claims adjustment expenses. Claimants/insurance clients will have higher customer satisfaction due to faster and improved service, both from insurers and from suppliers, and not least higher value-for-money. Suppliers benefit from lower distribution costs and from ensuring that lost or damaged items are replaced with the same category of goods (e.g. a lost bicycle will be replaced by a bicycle and not a trip to Paris).

Further, better utilisation of volume agreements and related discounts is possible for the products in the database, thereby ensuring low prices for the products used as replacements thereby giving the insurance client better options and a better probability of being able to receive a completely new product even if the product that was lost/stolen was quite old and thereby had a relatively great depreciation value.

In accordance with one embodiment of the method, the product match of a given type is selected from the group of:
- a first type match when an exact match is made between said replaceable product and product from the database,
- a second type match when a match is made between said replaceable product and a similar product where the normal retail price of the similar product is greater than the original price which is greater than the internal price of the similar product,
- a third type match when a match is made between the replaceable product and a similar product where the normal retail price of the similar product is not greater than the original price and/or where the original price is not greater than the internal price of the similar product, and/or
- a fourth type match when no match was possible.

In accordance with one embodiment, the compensation price for a given replaceable product is determined according to
- the compensation price is determined as the internal price in the database for the matched product if the match was of a first type,
- the compensation price is determined on the basis of the normal retail price or the original price or the new price and/or the internal price for the similar product if the match was of a second type,
- the compensation price is determined using the normal retail price or the original price or the new price and/or the internal price of the matched similar product as a hint if the match was of a third type, and
- no determination is possible using the database if the match was of a fourth type,
or in that said compensation price for a given replaceable product is determined according to
- the compensation price is determined as the internal price in the database for the matched product if the match was of a first, second or third type, and
- no determination is possible using the database if the match was of a fourth type.

In accordance with one embodiment, the information of the replaceable product to be replaced comprises one or more of
- the age of the product,
- the type of the product,
- the make/model of the product, and
- the manufacturer/supplier of the product.

In accordance with one embodiment, the restrictions is selected from the group of:
- the client has access to all products of the database, i.e. no restriction,
- the client has only access to the matched product,
- the client has only access to products from a given supplier,
- the client has only access to similar products being in a same sub-category as a sub-category of the replaceable product, and/or
- the client has only access to similar products being in a main category of a sub-category of the replaceable product.

In accordance with one embodiment, the method further comprises the step of:
- providing said client with information enabling a direct connection with the online shop and a password and/or an ID code.

In accordance with one embodiment, an internal price for a given product in said database is less than the normal retail price for the given product.

In a preferred embodiment said client is allocated an extra amount to purchase for in the web-shop, where a part of the extra amount that actually is spent is to be paid for by the client.

In accordance with another embodiment, the method comprises the steps of:
- calculating a depreciation amount of said replaceable product based on the age of said replaceable product, and
- deducting the depreciation amount from the compensation price resulting in a new compensation price that the client may purchase products for according to certain restrictions.

The invention also relates to a system for providing a replacement for a replaceable product of an insurance claim, comprising
- a database comprising information relating to a number of products,
- communication means for receiving relevant information, from a client, of the replaceable product to be replaced,
- processing means for deriving information from said database by matching information of said replaceable product with products in said database resulting in a product match of either a first, second, third or fourth type, where the derived information comprises information representing a compensation price for said replaceable product, said compensation price being dependent of the resulting type of match, and
- communication means for providing said client with access to an online web-shop, having access to said database, where the client may purchase products present in the database according to certain restrictions for an amount equal to said compensation price where the price of each product in the database is an internal price.

In one embodiment, the processing means is adapted to select said product match of a given type from the group of:
- a first type match when an exact match is made between said replaceable product and product from the database,
- a second type match when a match is made between said replaceable product and a similar product where the normal retail price of the similar product is greater than the original price which is greater than the internal price of the similar product,
- a third type match when a match is made between the replaceable product and a similar product where the normal retail price of the similar product is not greater than the original price and/or where the original price is not greater than the internal price of the similar product, and/or
- a fourth type match when no match was possible.

In one embodiment, the processing means is adapted to determine said compensation price for a given replaceable product according to
- the compensation price is determined as the internal price in the database for the matched product if the match was of a first type,
- the compensation price is determined on the basis of the normal retail price or the original price or the new price and/or the internal price for the similar product if the match was of a second type,
- the compensation price is determined using the normal retail price or the original price or the new price and/or the internal price of the matched similar product as a hint if the match was of a third type, and
- no determination is possible using the database if the match was of a fourth type,
or in that said compensation price for a given replaceable product is determined according to
- the compensation price is determined as the internal price in the database for the matched product if the match was of a first, second or third type, and
- no determination is possible using the database if the match was of a fourth type.

In one embodiment, the information of the replaceable product to be replaced comprises one or more of
- the age of the product,
- the type of the product,
- the make/model of the product, and
- the manufacturer/supplier of the product.

In one embodiment, the restrictions is selected from the group of:
- the client has access to all products of the database (504), i.e. no restriction,
- the client has only access to the matched product,
- the client has only access to products from a given supplier,
- the client has only access to similar products being in a same sub-category as a sub-category of the replaceable product, and/or
- the client has only access to similar products being in a main category of a sub-category of the replaceable product.

In one embodiment, the system further comprises communication means for:
- providing said client with information enabling a direct connection with the online shop and a password and/or an ID code.

In one embodiment, an internal price for a given product in said database is less than the normal retail price for the given product.

In one embodiment, the client is allocated an extra amount to purchase for in the web-shop, where a part of the extra amount that actually is spent is to be paid for by the client.

In one embodiment, the processing means is further adapted to:
- calculate a depreciation amount of said replaceable product based on the age of said replaceable product, and
- deduct the depreciation amount from the compensation price resulting in a new compensation price that the client may purchase products for according to certain restrictions.

The system and embodiments thereof have the same advantages for the same reasons as the method and embodiments thereof, and therefore they will not be described again.

Additionally, the invention relates to a computer readable medium having stored thereon instructions for causing one or more processing units to execute the method and/or embodiments thereof according to the present invention.

The present invention will now be described more fully with reference to the drawings, in which
Figure 1 shows a schematic flowchart of one embodiment according to the present invention;
Figure 2 illustrates an embodiment of the matching process in greater detail;
Figure 3 illustrates a schematic flowchart of one embodiment of the acquisition of replacement items/products according to the present invention;
Figure 4a and 4b illustrate embodiments of specific functions of Figure 3 in greater detail.
Figure 5a shows a schematic diagram of an embodiment of the system according to the present invention;
Figure 5b shows a schematic diagram of an alternative embodiment of the system according to the present invention.

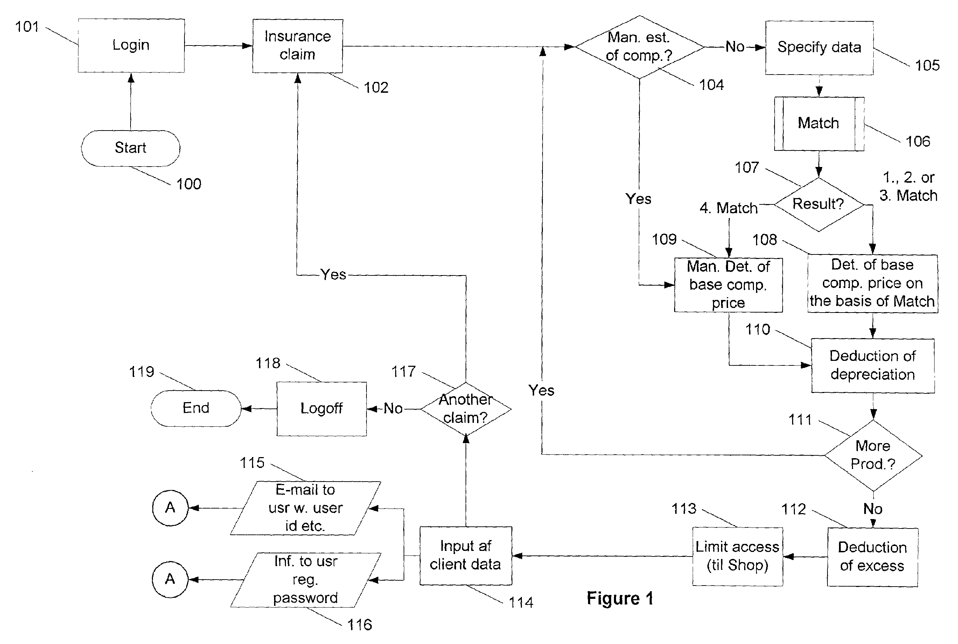

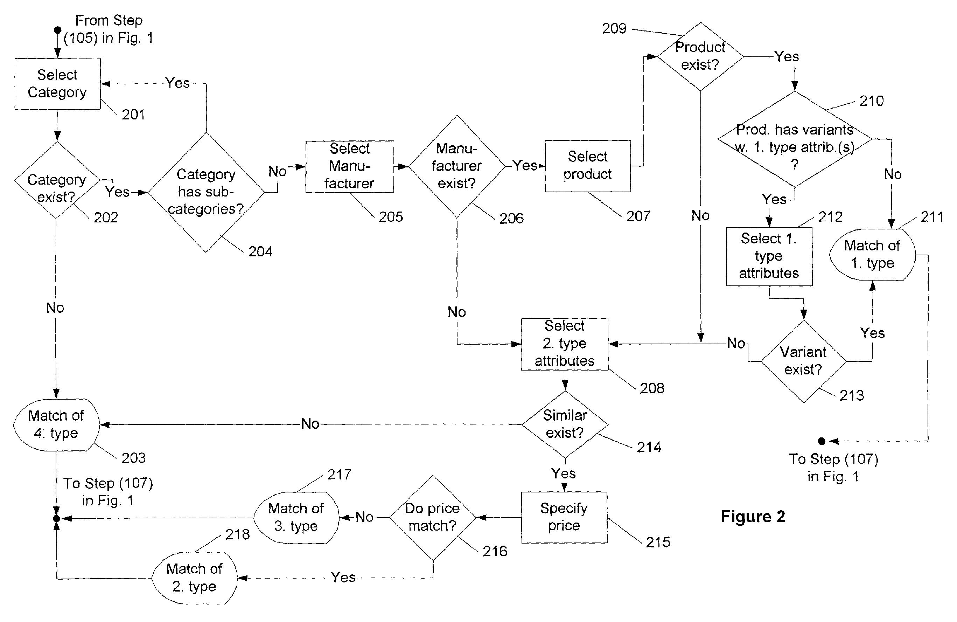

Figure 1 shows a schematic flowchart of one embodiment according to the present invention. In the following a system/method accord to the present invention is described. In the following, a compensation price/amount is the amount of money to which a client/a policyholder is entitled based on the insurance claim. An internal price/cost for a given product is the price that the online-shop/web-shop has to pay the supplier of the given product in order to acquire that product.

Preferably, the system of the present invention may be thought of as a first part of the system that resides at the insurance company and a second part of the system that resides at the web-shop. Note that a second part of the system typically works with several insurance companies/first parts of the system.

In step (100) the flow is initiated. In step (101) a login is performed to the system by a claims handler/claims assessor e.g. by specifying a user-id and a password. In step (102) the claims handler/the system receives information regarding an insurance claim, e.g. specifying the name of the insurance client, the replaceable claimed lost or damaged item/product, and other relevant information. A new insurance case may then be created in the system. Step (102) may also comprise an assessment of whether one or more products/items (and/or similar products) of the insurance claims are likely to be in the database of the system.

The database preferably comprises a product/item list/catalogue comprising information for each item like a category for the item (e.g. cameras, television sets, bikes, etc.), attributes/features (e.g. colour TV, racing bike, sizes, number of gears, model name, etc.), variants (e.g. defining different colour schemes, etc.), text description of the item, pictures of the item, name and information for a supplier/manufacturer of the given item, etc. The database also preferably comprises price information for each product like a normal retail price and an internal price.

The database is stored in suitable memory/storage means.

In step (104) it is determined whether a manual assessment of the compensation amount, price, etc. is to be made. This may e.g. depend on whether the lost/damaged item(s) is a bulk product/commodity (like CD's, etc.) or not. If a manual assessment is needed (e.g. if it is a bulk commodity), the method proceeds to step (109), which will described later, and if not the method proceeds to step (105) where relevant information regarding the product to be replaced/compensated is obtained, specified, etc. This information may e.g. comprise a product category (e.g. including sub-categories), a supplier/manufacturer, a model name/number, etc. This information is used to search a database comprising a product catalogue/list of the products, each product's make/model, supplier/manufacturer, product category (e.g. including sub-categories), etc. for a match in step (106). The match results in a product match of either a first, second, third or fourth type.

A match of the first type indicates that an exact match of the product of the insurance claim with a product of the product catalogue in the database of the system was possible.

A match of the second type indicates that a match is made between the product of the insurance claim and a similar product/a product in kind, where the normal retail price (i.e. the price that a person normally would have to pay for the product using traditional sales channels) of the similar product is greater than the original/new price of the insured product (i.e. the price that the client paid for the product or should pay for it today) which, again, is greater than an internal price of the similar product (i.e. the price that the insurance company/the web shop has to pay for it).

A match of the third type indicates that a match is made between the product of the insurance claim and a similar product/a product in kind, where the normal retail price of the similar product is not greater than the original price (or the new price for such a product today) and/or where the original/new price is not greater than the internal price of the similar product.

A match of the fourth type indicates that no match was possible between the product of the insurance claim and a similar product/a product in kind.

One specific embodiment of the matching step (106) will be described and explained in connection with Figure 2.

In step (107) the result of the match is tested. If the result of the match was a match of the fourth type (or test (104) was yes) then step (109) is executed, where a manual and/or other determination of a base compensation price/amount is made before proceeding to step (110). If test (107) determined that a match of the first, second or third type was made in step (106), then step (108) is executed where the base compensation price is determined based on the type of match.

If the match was of a first type, then the product of the insurance claim is present in the database. The price in the database for that product is then the base compensation price, and the method proceeds to step (110).

If the match was of a second type, then a similar product/a product in kind was found in the database, and the retail price (i.e. the price that a person would normally have to pay for the product using traditional sales channels) of the similar product is greater than the original price of the insured product (i.e. the price that the client paid for the product) which is greater than the internal price of the similar product. The base compensation price may then be determined using the retail and/or the internal price for the similar product as a starting point. However, it should be observed in the determination that the similar product may be of another brand, type, model, quality, etc., which gives more space for negotiation of/adjusting the base compensation price.

If the match was of a third type, then a similar product/a product in kind was found in the database, but the price requirements of a match of a second type are not met, i.e. the retail price of the similar product is not greater than the original/new price of the insured product and/or the original price of the insured product is not greater than the internal price of the similar product. The retail, and/or the internal price of the matched similar product may in general not be used in order to determine the base compensation price. However, the retail and/or the internal price may be used in order to give a hint about the base compensation price.

As a default price, the internal price is used in connection with a first, second, and third type match.

In step (110) a depreciation value for the insured item/product is calculated based on the age of the product of the insurance claim and the depreciation value is deducted from the base compensation price resulting in a compensation price for that particular product. In step (111) it is determined whether other products of the insurance claim need be processed, i.e. if the claim comprises more than one product. If several identical products are part of the insurance claim only a single base compensation needs to be derived. If no other products need to be processed, step (104) is executed for another product. If this is not the case, step (112) is executed where the excess, deductible, etc. according to the insurance policy is deducted from the total compensation price, i.e. the sum of compensation prices for all the products of the insurance claim. After deduction of the excess/deductible the sum may e.g. be changed by the first part of the system and/or the insurance claims handler if desired, e.g. dependent on the type of client. Additionally, the client may also be given a possibility of a 'trade-up', i.e. given the possibility of spending extra money in the online-shop to e.g. buy a more expensive product and/or several products. The available amount for trade-up may vary, e.g. dependent on the type of client. One example of a default value for trade-up is an amount equal to the derived total insurance sum, i.e. the sum of compensation prices (e.g. modified by the system and/or the claims handler).

In step (113), any restrictions of access to the online-shop may be given. The restrictions may e.g. be none (access to all the products in the associated online-shop), only access to a given main category e.g. for the sub-category to which the similar product belongs, only access to a given sub-category, e.g., to which the similar product belongs, only access to products in the online shop from a given manufacturer/supplier, etc, only access to obtain/buy the matched similar product from the online shop, and so on.

In step (114) client data/information is generated and/or specified in/by the system. This information may e.g. comprise the name of the insurance policy owner, address, phone number, e-mail, insurance claim number, etc.

Additionally, a unique user-id and a unique password are preferably also generated, said user-id and password relating to the client, the product(s), item(s), to the total insurance sum to which the client is entitled, etc.

The generated user-id and password are transmitted in step (115 and 116) to the client's computer together with other relevant information as described above. Preferably, the user-id and password are transmitted/communicated separately to the client. As an example, an e-mail may be sent to the client's computer comprising information as described above and the user-id. Preferably, the e-mail also comprises information, such as a URL, link, etc., enabling the client to connect directly to the associated online shop and automatically supplying relevant information identifying the user, etc. to the shop. The password may then be communicated to the client by phone, ordinary mail, etc. or by other secure means (e.g. in an encrypted format, using a secure communication protocol, etc.).

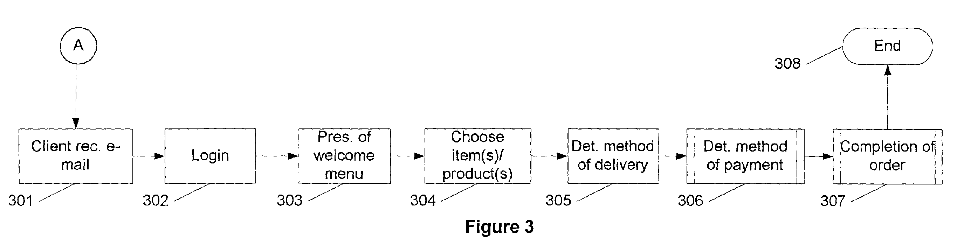

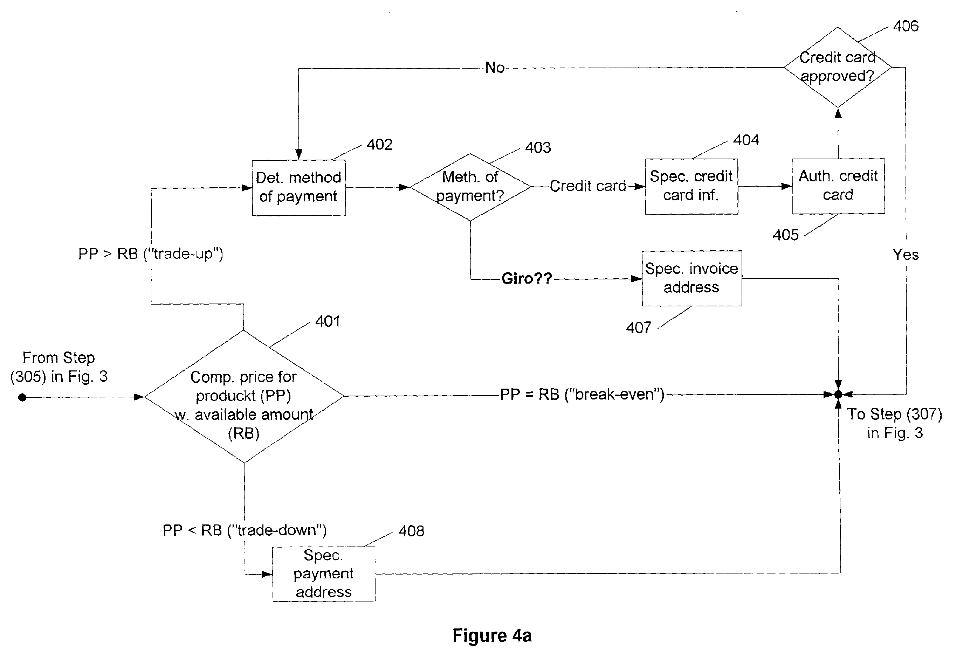

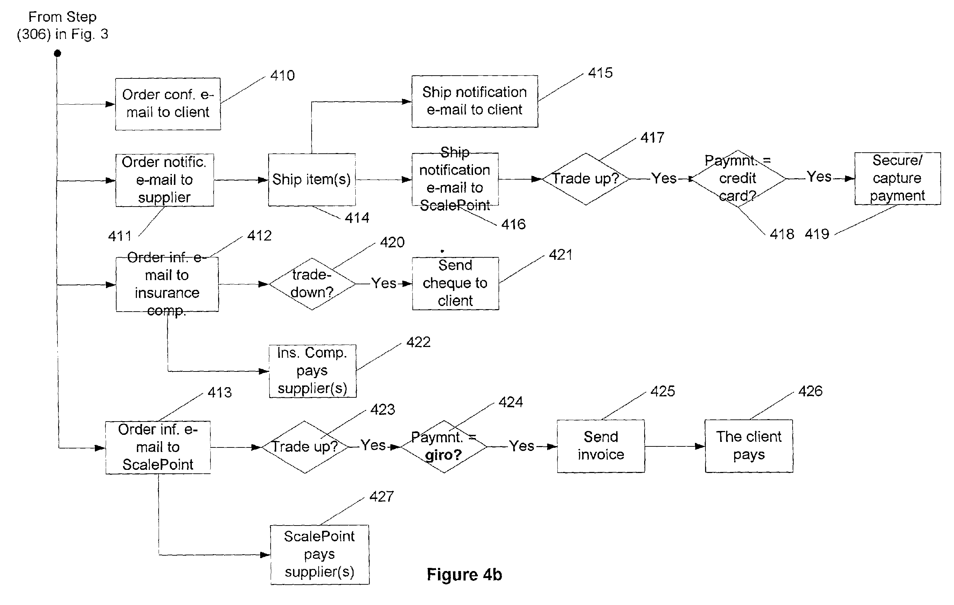

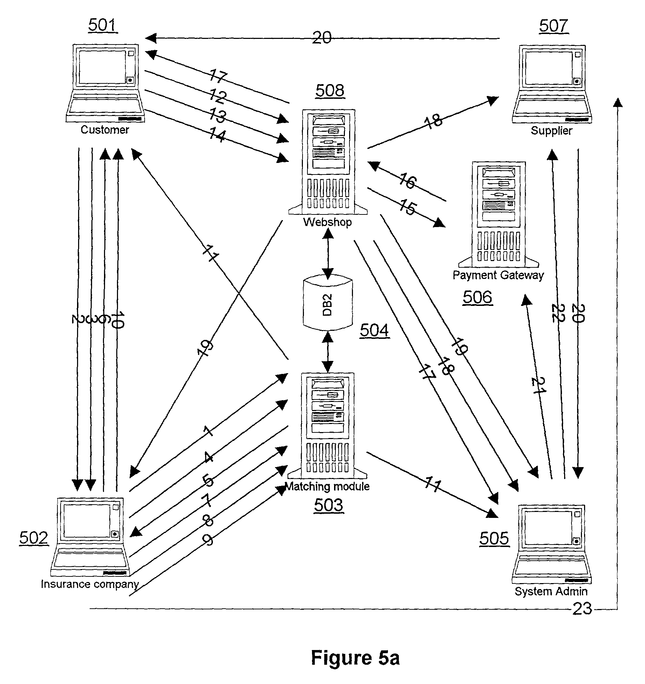

After the client has received this information in step (115 and 116), the client proceeds, after receiving the information, as indicated by 'A', to the online shop (e.g. using the link) in order to obtain the replacement(s) for the lost or damaged items, products, etc. This part of the method is described elsewhere in connection with Figures 3, 4a and 4b.

After step (114) (and e.g. parallel with steps 115 and 116) a check is made in step (117) regarding whether another insurance claim for another client needs to be handled. If this is not the case, a system log-off is executed, in step (118), before the method ends in step (119). If/when another insurance claim needs to be handled, the method proceeds once again to step (102) and the process is repeated.

Figure 2 illustrates an embodiment of the matching process in greater detail. In step (201) the (first part of the) system/the claims handler derives/selects a main category to which the lost/damaged product belongs. In step (202) a test is made whether the derived/selected main category exists. If it does not, the match is a match of a fourth type and the matching process ends and the method proceeds with step (107) in Figure 1. If the main category exists, a test in step (204) checks whether this main category has any sub-categories. If it has, a list of the sub-categories belonging to this main category is retrieved and a sub-category is selected in step (201) to which the product belongs and test (202) is performed again. Examples of main categories are bikes, photo, radio/TV, mobile equipment, computer, etc. Examples of sub-categories (for a photo category) are e.g. camera, blitz equipment, misc. etc. Examples of sub-sub-categories (for the sub-category camera) are e.g. digital camera, APS camera, reflex camera, etc.

In this way, a sub-category on the lowest level is selected, if possible, (otherwise the match is of the fourth type in step (203)) and the method proceeds to step (205), where a manufacturer/supplier is to be selected. A list of all the suppliers who have products in the selected (sub-)category is retrieved/displayed. If the supplier of the lost product exists, it is selected (either automatically or by the insurance handler) and the method proceeds to step (207). If the supplier does not exist, the method proceeds to step (208), which is explained later. In step (207), a list of the products which the chosen supplier has in the chosen category is retrieved/displayed. If the lost/damaged product is not in this list, as tested by step (209), the method proceeds to step (208). If the lost/damaged product is in the list, it is selected and the method proceeds to step (210) where the system checks whether the selected product has any product variants that may be differentiated according to attributes of a first type, i.e. is the difference between the selected product and its variant of little/no significant importance. If this is not the case, the match result becomes a match of a first type in step (211), i.e. a lost product exists in the database that is identical with the lost/damaged product that is to be replaced, and the method proceeds to step (107) in Figure 1. As an example of variants, take a given bike as the product, then the variants may include, size in inches of the wheels (e.g. 17", 19", etc.) and the number of gears, the colour of the bike, etc. and permutations thereof, e.g. 17", 7 gears, red and 19", 7 gears, red, etc.

If the selected product has variants with attributes of the first type, step (210) proceeds to step (212) where a list of the attributes of the first type is retrieved/displayed, i.e. attributes that differentiate the different variants of the selected product, and a value is assigned to each attribute and if the assigned combination of the attributes of the first type exists, the product match is designated a match of the first type in step (211) and the matching ends, and the overall method proceeds to step (107) in Figure 1. If the combination does not exist (or the method came from step (206) or step (209) with 'No'), step (208) is executed. If there are one or more attributes, where a value cannot be assigned, this is recorded and the method proceeds to step (208). Additionally, the insurance handler and/or the system may designate 'do not know' for a given attribute and that particular attribute will not be used as part of the match process.

In step (208) a list of attributes of a second type, which may be specified for products within the selected category, is retrieved/displayed. Values are assigned for each attribute and if, as tested in step (214), the combination exists, i.e. a similar product/a product in kind exists, the method proceeds to step (215). If the combination of attributes does not exist or if there are one or more attributes of the second type where a value cannot be assigned, this is recorded and the match is designated a match of the fourth type in step (203), i.e. a similar product does not exist in the database.

In step (215) a base compensation price is determined on the basis of the original price that the client has paid for the original product (or alternatively the client's assessment of what the original product would cost today). Based on the original price the products determined in step (208) are filtered according to:
- The new/original price is less or equal to the normal retail price (so that the client is not disadvantaged), and
- The internal price is less than or equal to the new/original price for the client's lost product (so that the insurance company is not disadvantaged).

If there are products that match both of these criteria, a product with the lowest internal price is selected as a match of a second type in steps (216 and 218). If there are not any products that match both criteria, then a product that is closest to fulfil the criteria is selected as a match of a third type in steps (216 and 217). The closeness may e.g. be determined as the maximum of the difference between the internal price & the new price and of the difference between the new price & the retail price, i.e. MAX (SP-KN;KN-VU) where SP is the internal price, KN is the new/original price, and VU is the normal retail price.

If the new price for the client's product is not known or may not be assessed, a product from the products determined in step (214) with the lowest internal price is selected as a match of a second type.

Examples of attributes are (for a product being a camera) e.g. zoom, date function, auto-flash, LCD monitor, auto-focus, etc.

Figure 3 illustrates a schematic flowchart of one embodiment of the acquisition of replacement items/products according to the present invention. In step (301) the client receives the e-mail comprising the relevant information sent in step (115) in Figure 1 and the corresponding password is preferably communicated in another way, in order to increase the security. The client may activate the URL in the e-mail and is directed to an online shop and logs-in in step (302) by specifying the corresponding password. After login relevant information is presented in step (302), e.g. such as client name, explanation of the buying process, support information, the amount of cash that may be spent, i.e. the compensation amount, and, if applicable, the trade-up amount. In step (304) the client is then able to choose the item(s)/product(s) to be a replacement for the lost/damaged product of the insurance claim according to the available amount, i.e. compensation + trade-up, and according to any restrictions that was made in step (113) in Figure 1. Preferably, the client is presented with the specific product matches that were determined during the claim handling and any other relevant information such as name, model, make for a given product, manufacturer/supplier, retail price, internal price, etc. Additionally, pictures and text describing the matched product may also be presented along with information regarding variants (e.g. colour, size, features, etc.). So if a client lost one item, only one item is preferably presented initially, and if two items were lost, the two matched items are presented, and so on.

Information regarding the products may be stored in a database identical to the one used in handling the insurance claim. Preferably, it is the same database residing e.g. on a central server accessible by both the shop and the insurance system. The client may preferably also search for items using keywords, etc. in the part of the product list in the database according to any restrictions determined earlier. When the client has chosen one or more items, then the method proceeds with step (305), where the client chooses a way of delivery for the chosen item(s), and in step (306) a method of payment is specified. After this, step (307) is executed where the client logs off the system and the order is completed, i.e. the difference between the compensation amount and an amount up to the trade-up amount is deducted from a credit card, a cheque is sent if e.g. less than the compensation amount was used (trade-down), the products are shipped to the client, confirmation is sent to the insurance company, etc.

Figure 4a shows a more detailed example of an embodiment of step (306) in Figure 3. In step (401) a comparison between the price for the selected product(s) (PP) and the available/compensated amount (RB), i.e. the compensation amount, is made. If the total price (PP) for the selected product(s) is greater than the compensated amount (RB), signifying that trade-up has been used, step (402) is executed. If the total price (PP) is less than the compensated amount (RB), signifying that trade-down has been used, step (408) is executed. If the total price (PP) is equal to the compensated amount (RB), the sub-procedure ends and the method proceed to step (307) in Figure 3.

In step (408), a payment address is specified, i.e. where to send a cheque in the amount of the difference between the spent amount and the compensated amount, before proceeding to step (307) in Figure 3.

In step (402), a method of paying for the amount above the compensated amount is determined. Choices are e.g. pay by credit card, pay by giro, C.O.D., etc. In step (403) a test of which method of payment that was selected by the client is made. If the client chose to pay by C.O.D., giro, etc., step (407) is executed where an address for the invoice is to be delivered before proceeding to step (307) in Figure 3.

If the client chose to pay by credit card, step (404) is executed where credit card information, like card number, expiration date, etc. is specified. In step (405) the credit card is checked and in step (406) it is determined whether the specified credit card is approved for payment. If this is the case, the method proceeds to step (307) in Figure 3. If this is not the case, step (402) is executed again, asking for another way of payment.

Figure 4b shows a more detailed example of an embodiment of step (307) in Figure 3. The embodiment starts from step (306) in Figure 3. In general, the system according to the embodiment automatically generates e-mails or other confirmations to the insurance client, the supplier/manufacturer, the insurance company and the web-shop.

In step (410), order confirmation in the form of an e-mail is generated and sent to the client. The order confirmation preferably comprises information relating to the purchased product/commodities, price per product/unit/commodity, total price, sum of retail prices for the units, supplier for each commodity, method of delivery for each commodity, maximum delivery time, and other relevant information. Preferably, the order may be divided into sub-orders.

In step (411), order confirmation in the form of an e-mail is generated and sent to each supplier/manufacturer. The order confirmation preferably comprises information relating to client name, delivery address, commodity, commodity make/model, price for each commodity and a total, method of delivery, maximum delivery time, an amount of money that the supplier will receive from the second part of the system/web-shop, an amount of money that the supplier will receive from the insurance company/first part of the system, etc. When the supplier receives the order confirmation, the commodity or commodities are shipped in step (414) and the client will receive an e-mail in step (415) comprising information that the commodity/commodities from that particular supplier have been shipped. A copy of the mail sent to the client is sent to the second part of the system/web-shop in step (416) where the second part of the system/web-shop tests in step (417) whether trade-up was used by the client. If the test is 'true'/'yes', a test whether a credit card was used as payment is made in step (418) by the second part of the system/web-shop. If also test (418) is 'true'/'yes', then step (419) is executed where the credit card payment is secured, captured, received, etc.

In step (412), order confirmation in the form of an e-mail is generated and sent to the insurance company/first part of the system. The order confirmation preferably comprises information relating to the name and address of the client (e.g. only if the insurance claim number is not correctly input into the company's database), the client's insurance claim number, used amount of the compensation amount, specification of the trade-up option was used or a if remaining amount of money exists, i.e. trade-down (that the client will receive on a cheque), etc.

In step (420) it is tested at the insurance company/first part of the system after receiving the e-mail whether trade-down was the case. In the affirmative, a cheque is sent to the client in step (421) for the remaining sum of money. Additionally, the insurance company/first part of the system pays the supplier(s) for the part of the compensation item(s) that is covered by the compensation in step (422).

In step (413), order confirmation in the form of an e-mail is generated and sent to the web-shop/the second part of the system. The order confirmation is preferably split up into sub-orders comprising information relating to spent amount, indication of trade-up or remaining amount wished to be received on a cheque, number of items for each sub-order, the name of the insurance company, the client's insurance claim number/insurance policy number. After receipt of the e-mail the web-shop/the second part of the system pays the supplier(s) in step (427). In step (423) it is tested whether trade-up was used by the insurance client. If this is the case, a test of the client specified payment by giro, C.O.D., etc. is made in step (424). If test (424) is 'true), then an invoice is sent to the client for the additional amount spent in step (425) which the client then pays in step (426).

In general, when a client has ordered commodities, access to the second part of the system/web-shop for that particular client, i.e. id code and password, is closed, indicating that the insurance claim compensation has been fulfilled.

Figure 5a shows a schematic diagram of an embodiment of the system according to the present invention. Shown is an insurance customer's/client's computer/terminal (501), a computer/terminal (502) used by an insurance claims handler at the insurance company, a matching module (503) (belonging to the first part of the system), a web-shop/web-server with an online-shop (508) (belonging to the second part of the system), a database (504) comprising the catalogue of replaceable products that may be acquired from the web-shop (508) as a replacement for a product of an insurance claim (the database preferably belongs to/is accessible by both parts of the system and is preferably ,also used by the matching module (503) as described elsewhere), a payment gateway (506), a supplier's/manufacturer's computer (507), and an administration module (505). The administration module (505) is responsible for and controls the system/method.

The parts of the system communicate as indicated by the arrows.

In the following, an example of a flow of information in the system will be described when trade-up is used and payment is by credit card. The numbers on the arrows in the figure indicate a sequence numbering for communication.
1. Login to the matching module/first part of the system by an insurance claims handler.
2. Phone call/contact between client and insurance claims handler.
3. Product information is sent from the client to the claims handler.
4. Product information is sent to the matching module.
5. A match is performed using the database. The result is transmitted to the claims handler.
6. Price negotiation between the claims handler and the client using the match as a basis, if possible.
7. Determination of base compensation price, depreciation and deductible
8. Access rights for the client is specified.
9. Customer information is sent to the matching module.
10. Password is communicated to the client.
11. Welcome e-mail to customer including URL and user-ID (copy sent to administration module).
12. Select products.
13. Shipping options.
14. Credit card info.
15. Credit card info + amount.
16. Authorization.
17. Order confirmation e-mail (copy sent to administration module).
18. Order notification e-mail (copy sent to administration module).
19. Order information e-mail (copy sent to administration module).
20. Shipping notification e-mail (copy sent to administration module).
21. Capturing.
22. Payment to the supplier from the administration module (the trade-up amount).
23. Payment to the supplier from the insurance company (the compensation amount).

If trade-down was used, a payment should also go to the client from the insurance company.

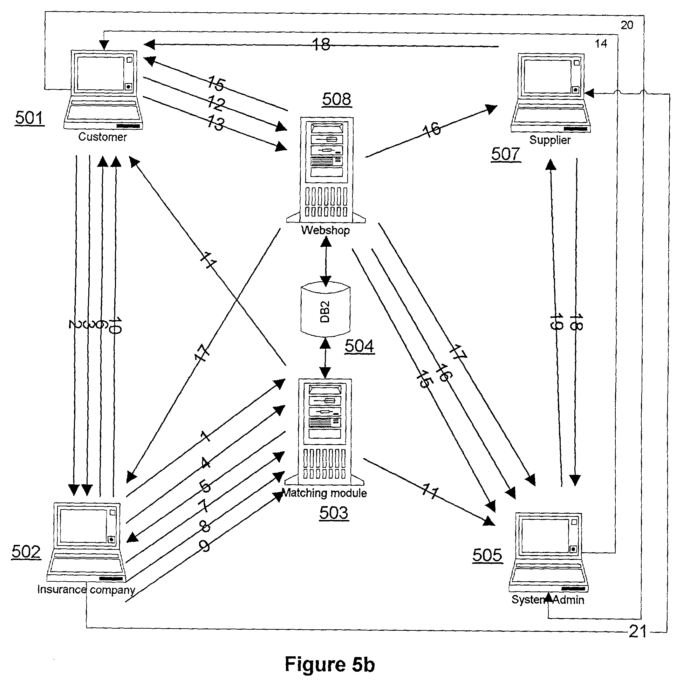

Figure 5b shows a schematic diagram of an alternative embodiment of the system according to the present invention. This figure corresponds to the one shown in Figure 5a but without the payment gateway.

In the following, an example of a flow of information in the system will be described when trade-up is used and payment is by giro, C.O.D., etc. The numbers on the arrows in the figure indicate a sequence numbering for communication.
1. Login to the matching module/first part of the system by an insurance claims handler.
2. Phone call/contact between client and insurance claims handler.
3. Product information is sent from the client to the claims handler.
4. Product information is sent to the matching module.
5. A match is performed using the database. The result is transmitted to the claims handler.
6. Price negotiation.
7. Determination of base compensation price, depreciation and deductible.
8. Access rights.
9. Customer information.
10. Password.
11. Welcome e-mail to customer including URL and userID (copy sent to administration module).
12. Select products.
13. Shipping options.
14. Invoice (giro).
15. Order confirmation e-mail (copy sent to administration module).
16. Order notification e-mail (copy sent to administration module).
17. Order information e-mail (copy sent to administration module).
18. Shipping notification e-mail (copy sent to administration module).
19. Payment to the supplier by administration module.
20. Payment to the administration module by the client (for the trade-up amount)
21. Payment to the supplier by the insurance company.

Steps 1 - 13 is identical with steps 1 - 13 in Figure 5a.

The various communication points (computer's, matching module, etc.) correspond to those shown in Figure 5a.

Further two use cases will be given to illustrate the system and method according to the present invention.

### The Case of Peter Jones

*Claims handler Martha Müller* had for 9 years been employed with one of the biggest insurance companies in the UK, SECURANCE. Over the years she had come to love her job and she was, most people thought, quite an expert in her field. The past couple of years, however, had been a time of constant change to improve efficiency: call centres, Internet applications, document handling, image scanning, customer segmentation, etc. Martha once thought she could never learn how to master all this new technology but she had recently come to the conclusion that the combination of her claims handling expertise together with the use of new technology had dramatically improved her productivity and efficiency. Especially, the system/method was a powerful tool to save payout costs and avoid fraud while keeping the customer happy. Like the other day when Mr. Peter Jones called in and reported that his summer house had burnt down and he had lost - among other things - an almost new Sony "22 XT 500 colour TV. As Martha entered his telephone number, her claims system immediately came up with a customer profile of Peter Jones, a good, profitable customer-to-keep for SECURANCE. While she entered the details of the incident and his lost TV into the claims report, the system/method allowed an immediate match with the 'replacement universe' according to the present invention. From the screen she could see that Jones could either be offered a brand new 22" SONY X5 TV or a cheque with a 30% discount against retail pricelist, either way saving SECURANCE 20-30% compared to 'the old times'. She finished the claims handling process in less than 3 minutes, filed the case and sent Peter Jones a code and reference number by email.

Peter Jones had never experienced such fast and consequent claims handling before. Although he was a bit sceptical towards SECURANCE's offer of like-for-like replacements instead of a cheque in the mail, he logged on to the system. After entering the code and reference number he was guided through the TV universe of the system and investigated alternative TVs at very low prices. Fantastic value-for-money, he thought, and was pleased that he was insured with SECURANCE. He would never dream of taking the cheque, but decided to go for a new B&O television, since he now - in this 'isolated world of claims' - also had the opportunity to replace a like-for-better. He entered his card details and address confirmation online, and in a few seconds he was informed that he could either pick up the TV at B&O's shop at Piccadilly or have it delivered for a £15 fee within a week from now. What a bargain - and what service! B&O management appreciated their agreement with administration of the system. In one strike they could now deal with a large number of the world's leading P&C insurers and participate in a gigantic replacement program. Now lost TV's would more rarely be replaced by "cash to burn". Replacement fraud would undoubtedly be reduced. The value chain could stay intact, and with this system/method a new channel to reach millions of private insurance customers would open up.

### The Case of Linda Smith

Ms. Smith had a 3-year old Raleigh bicycle stolen from her garage. She submitted a claims report by the Internet to her insurance company, XX. The claims handler entered the bicycle details into her computer to discover that the software of the invention provided a match of the first type with the Raleigh bicycle i.e. the item was in the selection of the system. She replied to Ms. Smith by e-mail that she should log on to www.ScalePoint.com via XX's home page and enter the code and reference number attached in the e-mail. Ms. Smith logged on to the site, entered the claim code and reference number and was happily surprised to discover that she would receive a brand new bicycle of same brand and value. The bicycle supplier was asked to deliver the bicycle against a minor service fee.
- The insured was happy to receive fast and efficient service, not to mention a brand new Raleigh bicycle instead of a cheque on 80% of the new value
- The insurance company was satisfied to collect an additional 20% saving (as opposed to paying out a cheque on new value less 20%), since the administration of the system according to the present invention had negotiated a 40% discount directly with Raleigh Manufacturing Ltd., United Kingdom

After all, Raleigh would rather sell one more bicycle at a higher discount, than watching a check distributed to the insured later spent on other items than a new bicycle,

The method and system according to the present invention is also applicable to other systems/methods than in the field of insurance claims handling.

## Claims

1. A method of providing a replacement for a replaceable product of an insurance claim, comprising the steps of:
• receiving relevant information, from a client (501), of the replaceable product to be replaced,
• deriving information from a database (504), comprising information relating to a number of products, by matching information of said replaceable product with products in said database (504) resulting in a product match of either a first, second, third or fourth type, where the derived information comprises information representing a compensation price for said replaceable product, said compensation price being dependent of the resulting type of match, and
• providing said client (501) with access to an online web-shop (508), having access to the database (504), where the client (501) may purchase products present in the database (504) according to certain restrictions for an amount equal to said compensation price where the price of each product in the database (504) is an internal price.

2. A method according to claim 1, **characterized in that** said product match of a given type is selected from the group of:
• a first type match when an exact match is made between said replaceable product and product from the database (504),
• a second type match when a match is made between said replaceable product and a similar product where the normal retail price of the similar product is greater than the original price which is greater than the internal price of the similar product,
• a third type match when a match is made between the replaceable product and a similar product where the normal retail price of the similar product is not greater than the original price and/or where the original price is not greater than the internal price of the similar product, and/or
• a fourth type match when no match was possible.

3. A method according to claims 1 - 2, **characterized in that** said compensation price for a given replaceable product is determined according to
• the compensation price is determined as the internal price in the database for the matched product if the match was of a first type,
• the compensation price is determined on the basis of the normal retail price or the original price or the new price and/or the internal price for the similar product if the match was of a second type,
• the compensation price is determined using the normal retail price or the original price or the new price and/or the internal price of the matched similar product as a hint if the match was of a third type, and
• no determination is possible using the database if the match was of a fourth type,
or **in that** said compensation price for a given replaceable product is determined according to
• the compensation price is determined as the internal price in the database for the matched product if the match was of a first, second or third type, and
• no determination is possible using the database if the match was of a fourth type.

4. A method according to claims 1 - 3, **characterized in that** said information of the replaceable product to be replaced comprises one or more of
• the age of the product,
• the type of the product,
• the make/model of the product, and
• the manufacturer/supplier of the product.

5. A method according to claims 1 - 4, **characterized in that** said restrictions is selected from the group of:
• the client has access to all products of the database (504), i.e. no restriction,
• the client has only access to the matched product,
• the client has only access to products from a given supplier,
• the client has only access to similar products being in a same sub-category as a sub-category of the replaceable product, and/or
• the client has only access to similar products being in a main category of a sub-category of the replaceable product.

6. A method according to claims 1 - 5, **characterized in that** said method further comprises the step of:
• providing said client (501) with information enabling a direct connection with the online shop (508) and a password and/or an ID code.

7. A method according to claims 1 - 6, **characterized in that** an internal price for a given product in said database (504) is less than the normal retail price for the given product.

8. A method according to claims 1 - 7, **characterized in that** the client is allocated an extra amount to purchase for in the web-shop (508), where a part of the extra amount that actually is spent is to be paid for by the client.

9. A method according to claims 1 - 8, **characterized in that** said method comprises the steps of:
• calculating a depreciation amount of said replaceable product based on the age of said replaceable product, and
• deducting the depreciation amount from the compensation price resulting in a new compensation price that the client may purchase products for according to certain restrictions.

10. A system for providing a replacement for a replaceable product of an insurance claim, comprising
• a database (504) comprising information relating to a number of products,
• communication means for receiving relevant information, from a client (501), of the replaceable product to be replaced,
• processing means for deriving information from said database (504) by matching information of said replaceable product with products in said database (504) resulting in a product match of either a first, second, third or fourth type, where the derived information comprises information representing a compensation price for said replaceable product, said compensation price being dependent of the resulting type of match, and
• communication means for providing said client (501) with access to an online web-shop (508), having access to said database (504), where the client (501) may purchase products present in the database (504) according to certain restrictions for an amount equal to said compensation price where the price of each product in the database (504) is an internal price.

11. A system according to claim 10, **characterized in that** said processing means is adapted to select said product match of a given type from the group of:
• a first type match when an exact match is made between said replaceable product and product from the database (504),
• a second type match when a match is made between said replaceable product and a similar product where the normal retail price of the similar product is greater than the original price which is greater than the internal price of the similar product,
• a third type match when a match is made between the replaceable product and a similar product where the normal retail price of the similar product is not greater than the original price and/or where the original price is not greater than the internal price of the similar product, and/or
• a fourth type match when no match was possible.

12. A system according to claims 10 - 11, **characterized in that** processing means is adapted to determine said compensation price for a given replaceable product according to
• the compensation price is determined as the internal price in the database for the matched product if the match was of a first type,
• the compensation price is determined on the basis of the normal retail price or the original price or the new price and/or the internal price for the similar product if the match was of a second type,
• the compensation price is determined using the normal retail price or the original price or the new price and/or the internal price of the matched similar product as a hint if the match was of a third type, and
• no determination is possible using the database if the match was of a fourth type, or **in that** said compensation price for a given replaceable product is determined according to
• the compensation price is determined as the internal price in the database for the matched product if the match was of a first, second or third type, and
• no determination is possible using the database if the match was of a fourth type.

13. A system according to claims 10 - 12, **characterized in that** said information of the replaceable product to be replaced comprises one or more of
• the age of the product,
• the type of the product,
• the make/model of the product, and
• the manufacturer/supplier of the product.

14. A system according to claims 10 - 13, **characterized in that** said restrictions is selected from the group of:
• the client has access to all products of the database (504), i.e. no restriction,
• the client has only access to the matched product,
• the client has only access to products from a given supplier,
• the client has only access to similar products being in a same sub-category as a sub-category of the replaceable product, and/or
• the client has only access to similar products being in a main category of a sub-category of the replaceable product.

15. A system according to claims 10 - 14, **characterized in that** said system further comprises communication means for:
• providing said client (501) with information enabling a direct connection with the online shop (508) and a password and/or an ID code.

16. A system according to claims 10 - 15, **characterized in that** an internal price for a given product in said database (504) is less than the normal retail price for the given product.

17. A system according to claims 10 - 16, **characterized in that** the client is allocated an extra amount to purchase for in the web-shop (508), where a part of the extra amount that actually is spent is to be paid for by the client.

18. A system according to claims 10 - 17, **characterized in that** said processing means is further adapted to:
• calculate a depreciation amount of said replaceable product based on the age of said replaceable product, and
• deduct the depreciation amount from the compensation price resulting in a new compensation price that the client may purchase products for according to certain restrictions.

19. A computer readable medium having stored thereon instructions for causing one or more processing units to execute the method according to any one of claims 1 - 9.
